# EUROPEAN PATENT APPLICATION

(11) **EP 4 053 868 A1**
(43) Date of publication of application: **07.09.2022**
(21) Application number: 22157131.8
(22) Date of filing: 16.02.2022
(51) Int. Cl.: H01G 11/52, H01M 50/443, H01M 50/446, H01M 10/0525

(54) **LIQUID COMPOSITION**

(30) Priority: 01.03.2021 JP 2021031494
(71) Applicant: Ricoh Company, Ltd., Tokyo 143-8555 (JP)
(72) Inventor: Ukigaya, Masayuki, Tokyo, 143-8555 (JP)
(74) Representative: Marks & Clerk LLP

(57) **Abstract**

[Summary] The present invention is to provide a liquid composition having good discharging property, and wherein unevenness in the coating thickness after drying does not readily occur.

[Tasks] A liquid composition includes alumina and a solvent (A), wherein a ratio of the alumina to the liquid composition is 20% by mass or more and 50% by mass or less, and wherein the alumina contains alumina particles having a particle size greater than 1.5 times a median diameter of the alumina.

## Description

### BACKGROUND OF THE INVENTION

### 1. Field of the Invention

The present invention relates to a liquid composition.

### 2. Description of the Related Art

Conventional electrochemical devices such as lithium ion secondary batteries, electric double layer capacitors, lithium ion capacitors, redox capacitors, and the like use paper, non-woven fabric, and porous film as separators in order to prevent short circuits between the positive and negative electrodes. In recent years, an electrode-integrated separator in which an electrode alloy layer and a particle layer are sequentially formed on an electrode substrate has been used (see, for example, Japanese Patent Documents 1 and 2).

Electrode-integrated separators are typically manufactured by applying a liquid composition containing particles onto an electrode alloy layer. By discharging the liquid composition from a liquid discharge head, a uniform particle layer can be easily applied.

For the liquid composition applied on the electrode, if the ratio of the particles to the liquid composition is small, the particles tend to move easily because it takes time for the solvent to evaporate, and the thickness of film coating after drying tends to be uneven. Therefore, it is desired to have a higher solid content concentration compared to a liquid composition such as ink suitable for application on paper.
[Patent Document 1] Japanese Patent Application Laid-Open No. 2000-277386
[Patent Document 2] Japanese Patent Application Laid-Open 2006-173001

### SUMMARY OF THE INVENTION

### [Problem to be solved by the invention]

However, with respect to a high concentrated liquid composition to suppress unevenness of the thickness of coating film after drying, there is a possibility that the viscosity increases when a force is applied by agitation or the like, and there is a concern that the discharge property of the liquid composition deteriorates as the viscosity increases. In addition, the discharge property of the liquid composition deteriorates. Therefore, it is difficult to form the particle layer on the electrode.

An object of the present invention is to provide a liquid composition having good discharging property, and wherein unevenness in the coating film thickness after drying is unlikely to occur.

### [Means for Solving Problems]

One aspect of the invention is a liquid composition including alumina and a solvent (A), wherein a ratio of alumina to the liquid composition is 20% by mass or more and 50% by mass or less, and wherein the alumina contains alumina particles having a particle size greater than 1.5 times a median diameter of the alumina.

### [Effects of the Invention]

According to one aspect of the present invention, a liquid composition having good dispensing property, and wherein unevenness in the coating thickness after drying does not readily occur, can be provided.

### BRIEF DESCRIPTION OF THE DRAWINGS

FIG. 1 is a cross-sectional view indicating an example of a negative electrode;
FIG. 2 is a schematic diagram indicating an example of a method of manufacturing a negative electrode;
FIG. 3 is a schematic view indicating another example of a method of manufacturing a negative electrode;
FIG. 4 is a schematic view indicating a modified example of the liquid discharge device of FIGS. 2 and 3;
FIG. 5 is a cross-sectional view indicating an example of a positive electrode;
FIG. 6 is a cross-sectional view indicating an example of an electrode element constituting an electrochemical device;
FIG. 7 is a cross-sectional view indicating an example of an electrochemical device;
FIG. 8 is a schematic perspective view indicating an example of a liquid discharge device;
FIG. 9 is a schematic configuration view indicating an example of a separator-integrated electrode; and
FIG. 10 is a cross-sectional view of line A-A of FIG. 9.

### DETAILED DESCRIPTION OF THE PREFERRED EMBODIMENTS

Hereinafter, embodiments of the present invention will be described.

### <Liquid Composition>

The liquid composition of the present embodiment includes alumina and a solvent A. The liquid composition of the present embodiment may optionally contain a solvent B different from the solvent A or a resin. The liquid composition of the present embodiment can be prepared by adding the solvent B to a dispersion liquid containing the alumina, the solvent A, and, if needed, the resin.

Known dispersion devices can be used to disperse the liquid composition of the present embodiment. Examples of the dispersion devices include agitators, ball mills, bead mills, ring-type mills, high-pressure dispersers, rotary high-speed shearing devices, ultrasonic dispersers, and the like.

### [Alumina]

The alumina contained in the liquid composition of the present embodiment is suitable for manufacturing separator-integrated electrodes because of its high insulating and heat resistant properties. When used in the manufacture of separator-integrated electrodes, alumina can function as a scavenger for junk (i.e., species that cause a capacitive fade in a charge storage device such as a lithium-ion secondary battery).

When such alumina is used as the liquid composition of the present embodiment, the charge storage device manufactured using the liquid composition of the present embodiment will be superior in terms of safety or battery life. In addition, alumina has excellent wettability for electrolyte, resulting in high electrolyte absorption and improved cycle performance of lithium-ion secondary batteries.

The type of alumina used as the liquid composition is not particularly limited. Examples of aluminas include α-alumina, γ-alumina, β-alumina, fused alumina, and the like. Among these, α-alumina is preferable from the viewpoint of insulation and abrasion resistance.

These aluminas may be used by mixing one or more of them. When two or more kinds of alumina are used, a main component of the alumina is preferably α-alumina. Here, when the main component is α-alumina, the content of α-alumina in the total alumina is 50% by mass or more. The content is preferably 60% by mass or more and more preferably 70% by mass or more.

A ratio of the alumina to the liquid composition of the present embodiment is 20% by mass or more and 50% by mass or less, preferably 25% by mass or more and 48% by mass or less, and more preferably 35% by mass or more and 45% by mass or less. Such content of alumina indicates higher solid content than liquid compositions, such as inks, suitable for application on paper. By adjusting the alumina content to such a range, unevenness of the coating thickness after drying can be suppressed.

The alumina contained in the liquid composition of the present embodiment includes alumina particles having a particle size greater than 1.5 times the median diameter of the alumina. Here, the median diameter indicates the particle size for which the cumulative frequency in terms of number is 50%. The alumina particles in which the diameter of the alumina is greater than 1.5 times the median diameter of the alumina indicate that a portion of the alumina is composed of alumina particles in which the diameter of the alumina is greater than 1.5 times the median diameter.

In addition, in the alumina contained in the liquid composition of the present embodiment, a ratio of a number of alumina particles greater than 1.5 times the median diameter is preferably 10% or higher. Here, the ratio of particles greater than 1.5 times the median diameter indicates the ratio (number %) of the number of particles greater than 1.5 times the median diameter calculated in the particle size distribution to the total number of alumina particles analyzed by image analysis of 3,000 or more particles having a particle size of 0.2 µm or more.

### [Solvent A]

A solvent A can disperse alumina particles in the liquid composition. The solvent A is preferably, but not particularly limited, a solvent having alumina affinity. Examples of the solvent A include lactams, alcohols, sulfoxides, esters, ketones, and the like.

Examples of lactams include 1-methyl-2-pyrrolidone, 2-pyrrolidone, and the like.

Examples of alcohols include isopropyl alcohol, butanol, diacetone alcohol, and the like.

Examples of sulfoxides include dimethyl sulfoxide and the like.

Examples of esters include ethyl acetate, butyl acetate, ethyl lactate, ethylene glycol diacetate, and the like.

Examples of ketones include diisobutyl ketone, 2-butanone, 2-pentanone, diacetone alcohol, and the like.

### [Solvent B]

A solvent B is a different solvent from the solvent A. The solvent B can be optionally compounded to compensate for insufficient function of the solvent A. Examples of the solvent B include a solvent having a function of dispersing alumina particles, a solvent having a high boiling point for preventing the drying of the nozzle of the liquid discharge head, a solvent having a suitable viscosity and surface tension when discharging from the liquid discharge head, and a solvent capable of preventing the absorption of alumina particles into the electrode matching material layer.

The solvent B is not particularly limited. The solvent B is preferably a solvent having alumina affinity. Examples of the solvent B include ether, glycol, ester, alcohol, or lactam.

Examples of ethers include propylene glycol monopropyl ether and the like.

Examples of glycols include propylene glycol, ethylene glycol, triethylene glycol, hexylene glycol, and the like.

Examples of esters include ethyl lactate, ethylene carbonate, ethylene glycol diacetate, and the like.

Examples of alcohols include cyclohexanol, propylene glycol monopropyl ether, and the like.

Examples of lactams include 2-pyrrolidone and the like.

The components of these solvents B may be used by mixing one or more kinds of components. It should be noted that the amount of solvent B is optional.

### [Resin]

The liquid composition of the present embodiment may include a resin. The strength of the deposited functional film can be improved by adding the resin.

The number average molecular weight of the resin is normally from 1,000 to 100,000, preferably from 1,000 to 10,000, and even more preferably from 1,000 to 5,000, in terms of suppressing the increase in viscosity of the liquid composition.

The resin is preferably a polymeric dispersant having a dispersible group and an adsorptive group. In particular, when the alumina particles are charged, a polymer dispersant having an ionic group having the polarity opposite to the polarity with which the alumina particles are charged is preferable as the adsorptive group in terms of the adsorptive strength with respect to the alumina particles.

Examples of ionic groups include sulfonic acid groups and their salts (for example, potassium salts, sodium salts, lithium salts, ammonium salts), carboxyl groups and their salts (for example, potassium salts, sodium salts, lithium salts, ammonium salts), and primary, secondary, tertiary amino groups and their salts.

The ionic group may be either an anionic group or a cationic group, but is preferably an anionic group in terms of dispersibility of the alumina particles. Examples of the anionic groups include salts of carboxyl groups, salts of sulfonic acid groups, salts of phosphate groups, and the like.

Ionic groups are usually present on the side chains or ends of the polymeric dispersant. The ionic group is preferably present on the side chain of the polymeric dispersant in terms of suppressing the increase in viscosity of the liquid composition.

The dispersible group may have a structure that is soluble in the solvents A and B. However, when used as a lithium-ion secondary battery, an oligoether group is preferably used from the viewpoint of ionic conductivity. An oligoether group is a group from which the hydroxyl group is removed from the end of a polymer of ethylene glycol or propylene glycol.

The molecular weight of the polymer of ethylene glycol or propylene glycol is preferably 100 or more and 10,000 or less, and further preferably 100 or more and 5,000 or less. When the molecular weight of the polymer of ethylene glycol or propylene glycol is 100 or more, the dispersibility of the alumina particles is improved. When the molecular weight is 10,000 or less, the increase in the viscosity of the liquid composition can be suppressed.

The end of the unbound side of the oligoether group may be a hydroxyl group, a methoxy group, an ethoxy group, a propoxy group, or the like. If a resin having an oligoether group is used, the dispersibility of the alumina particles can be improved even when a highly polar solvent is used as the solvent A and the solvent B.

Examples of commercially available polymeric dispersants include DISPERBYK-103, DISPERBYK-118, DISPERBYK-2155 (manufactured by BYK-Chemie), NOPCOSPERSE-092, SN-SPERSE-2190, SN-DISPERSANT-9228 (manufactured by SAN NOPCO Limited), ESLEAM (Registered Trademark), AD-3172M, ESLEAM 2093, MALIALIM (Registered Trademarks), AKM-0513, MALIALIM HKM-50A, MALIALIM HKM-150A, MALIALIM SC-05055K, MALIALIM SC-1015F, MALIALIM SC-0708A (manufactured by NOF Corporation), and the like.

The mass ratio of the polymeric dispersant to the alumina particles is usually 0.01 % or more and 10% or less. When the dispersibility of the alumina particles is considered, the mass ratio of the polymeric dispersant to the alumina particles is preferably 0.1% or more and 10% or less.

As a resin, a polymer dispersant and a binder may be used together. Examples of binders include polyvinylidene fluoride, styrene butadiene rubber, acrylic resin, and the like. The binder may be dissolved or dispersed in the liquid composition.

In addition, a precursor of the binder may be used instead of the binder. Examples of the precursors of the binder include monomers and the like. For example, the liquid composition containing monomers and optionally further containing a polymerization initiator is applied onto an absorbent medium, and subsequently heated or illuminated to polymerize the monomers to form a binder.

The liquid composition of the present embodiment preferably has a thickening index of 0.5 mPa·s or less. In the present specification, the thickening index is obtained by performing viscosity measurements at a rotation speed of 100 rpm, measuring a first viscosity immediately after the measurement, measuring a second viscosity one minute after the measurement, and subtracting the first viscosity value from the second viscosity value to obtain the thickening index. When the thickening index is less than 0.5 mPa·s, it indicates that the increase in viscosity is suppressed.

The liquid composition of the present embodiment may further contain other components (for example, surfactants, pH adjusters, corrosion inhibitors, antiseptics, mold inhibitors, antioxidants, anti-reduction agents, evaporation accelerators, chelating agents, and the like) for the purpose of adjusting viscosity, adjusting surface tension, controlling evaporation of solvents, improving solubility of additives, improving dispersibility of alumina particles, sterilizing, and the like.

### [Method of Applying Liquid Composition]

As the method of applying the liquid composition of the present embodiment, a method of discharging liquid such as an ink jet ejection method is preferably used because the ejection position can be controlled.

Examples of the method of discharging the liquid composition in the liquid discharge method include a method of applying mechanical energy to the liquid composition, a method of applying thermal energy to the liquid composition, and the like. Among them, a method of applying mechanical energy to the liquid composition is preferably used in terms of dispersion stability.

When the liquid discharge method is used, a technique using the principle of liquid discharge of a known liquid discharge device may be applied. However, a solvent having a flow passage installed in the liquid discharge device and a nozzle-resistant solvent of the liquid discharge head are preferably used as the solvents A and B contained in the liquid composition.

### [Method of Manufacturing Electrode]

The liquid composition of the present embodiment can be used in the manufacture of electrodes. Such a method of manufacturing electrodes includes the step of discharging the liquid composition of the present embodiment onto an electrode substrate.

Materials of constituting the electrode substrate (current collector) are not particularly limited as long as the materials have conductivity and are stable to a potential to be applied.

The method of manufacturing electrodes using the liquid composition of the present embodiment further preferably includes a step of pressurizing the electrode substrate from which the liquid composition is discharged. This prevents the electrode components from peeling off and improves the reliability of the device.

The electrode used in the liquid composition of the present embodiment has a negative electrode and a positive electrode.

### [Negative Electrode]

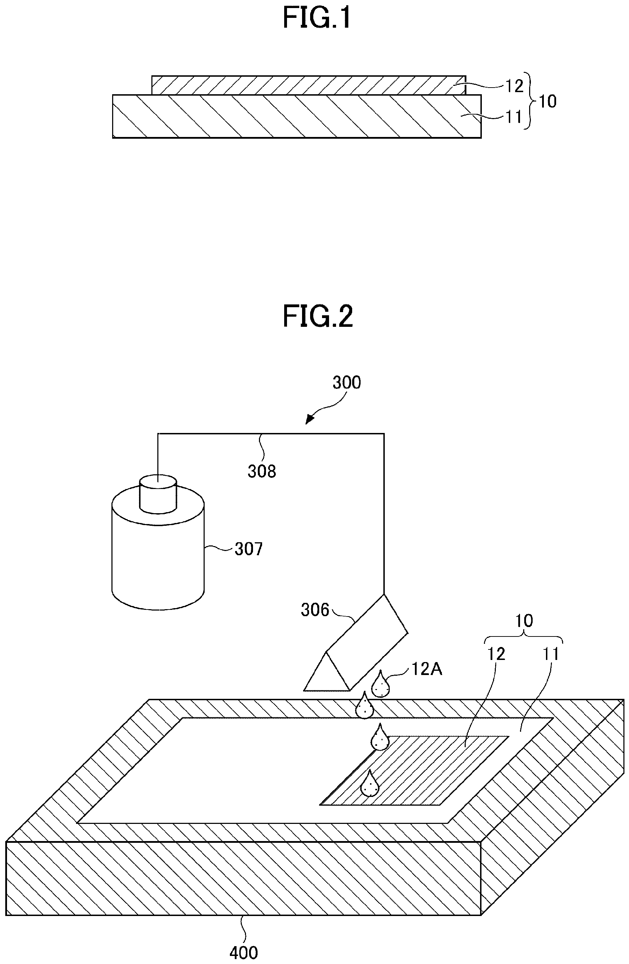

An example of the negative electrode is indicated in FIG. 1. The negative electrode 10 is formed on one surface of the negative electrode substrate 11 with a negative electrode composite layer 12 including a negative electrode active material and a polymer. The negative electrode composite layer 12 may be formed on both surfaces of the negative electrode substrate 11.

The shape of the negative electrode 10 is not particularly limited and may include, for example, a flat plate and the like. Examples of the materials constituting the negative electrode substrate 11 include stainless steel, nickel, aluminum, copper, and the like.

### [Method of Manufacturing Negative Electrode]

FIG. 2 indicates an example of a method of manufacturing the negative electrode. The method of manufacturing the negative electrode 10 includes a step of discharging a liquid composition 12A onto the negative electrode substrate 11 using a liquid discharging device 300.

Here, the liquid composition 12A includes a negative electrode active material, a dispersion medium, and a polymer. The liquid composition 12A is stored in a tank 307 and fed from the tank 307 through a tube 308 to a liquid discharge head 306.

The liquid discharging device 300 may also be provided with a mechanism to cap a nozzle to prevent the liquid composition 12A from drying when the liquid composition 12A is not discharged from the liquid discharge head 306.

In manufacturing the negative electrode 10, the negative electrode substrate 11 is placed on a stage 400 capable of being heated, droplets of the liquid composition 12A are discharged to the negative electrode substrate 11, and then heated. The stage 400 may then move, and the liquid discharge head 306 may move.

When the liquid composition 12A discharged to the negative electrode substrate 11 is heated, it may be heated by the stage 400 or by a heating mechanism other than the stage 400.

The heating mechanisms are not particularly limited as long as the heating mechanisms do not directly contact with the liquid composition 12A. Examples of the heating mechanisms include resistive heating heaters, infrared heaters, fan heaters, and the like. A plurality of heating mechanisms may be provided.

The heating temperature is not particularly limited as long as the temperature is capable of volatilizing the dispersion medium. The heating temperature is preferably in the range of 70°C to 150°C in terms of power consumption.

UV light may also be irradiated when the liquid composition 12A discharged to the negative electrode substrate 11 is heated.

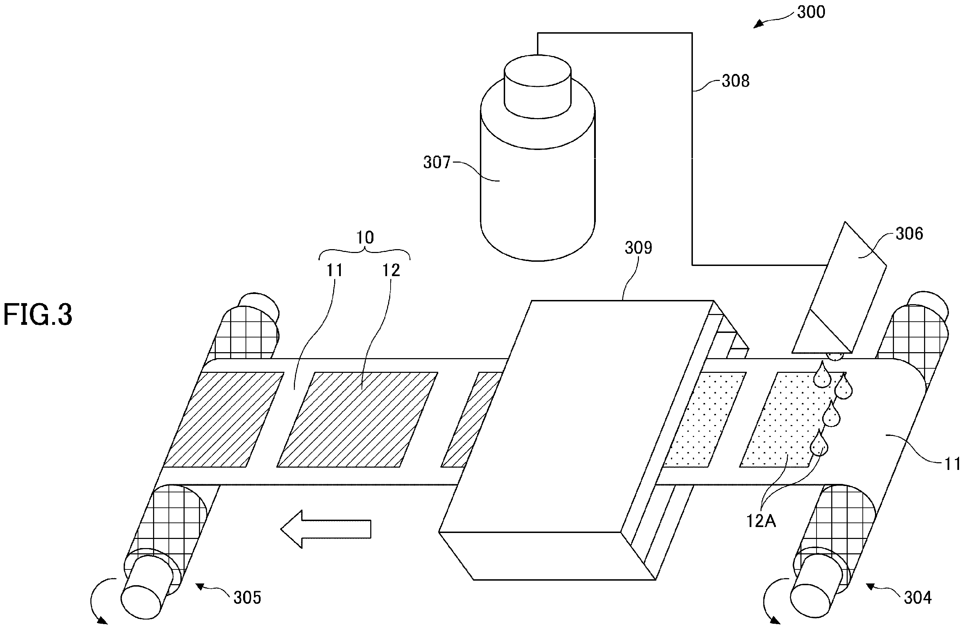

FIG. 3 indicates another example of a method of manufacturing the negative electrode. The method of manufacturing the negative electrode 10 includes a step of discharging the liquid composition 12A onto the negative electrode substrate 11 using the liquid discharging device 300.

First, an elongate negative electrode substrate 11 is prepared. Then, the negative electrode substrate 11 is wound around a cylindrical core and set to a feed roller 304 and a take-up roller 305 so that the side where the negative electrode composite material layer 12 is formed is on the upper side in the drawing. Here, the feed roller 304 and the take-up roller 305 rotate counterclockwise, and the negative electrode substrate 11 is conveyed from the right direction to the left direction in the drawing.

The droplets of the liquid composition 12A are discharged from the liquid discharge head 306 disposed above the negative electrode substrate 11 between the feed roller 304 and the take-up roller 305 onto the negative electrode substrate 11 to be conveyed. The droplets of the liquid composition 12A are discharged to cover at least a portion of the negative electrode substrate 11.

A plurality of liquid discharge heads 306 may be disposed in a direction substantially parallel to or substantially perpendicular to the conveying direction of the negative electrode substrate 11.

Next, the negative electrode substrate 11 on which the liquid composition 12A is discharged is conveyed to a heating mechanism 309 by the feed roller 304 and the take-up roller 305. As a result, the dispersion medium contained in the liquid composition 12A on the negative electrode substrate 11 is volatilized to form the negative electrode composite material layer 12 to obtain the negative electrode 10. The negative electrode 10 is then cut to a desired size by a punching process or the like.

The heating mechanism 309 is not particularly limited as long as the heating mechanism does not directly contact with the liquid composition 12A. Examples of the heating mechanisms include resistive heating heaters, infrared heaters, fan heaters, and the like. The heating mechanism 309 may be disposed on either above or below of the negative electrode substrate 11, or a plurality of the heating mechanisms may be disposed.

The heating temperature is not particularly limited as long as the temperature is capable of volatilizing the dispersion medium. The heating temperature is preferably in the range of 70°C to 150°C in terms of power consumption.

UV light may also be irradiated when the liquid composition 12A discharged to the negative electrode substrate 11 is heated.

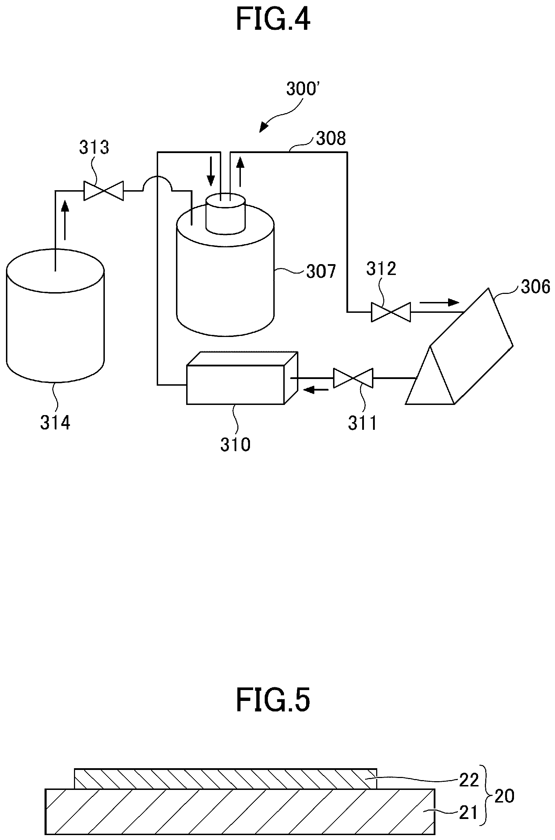

FIG. 4 indicates a modification of the liquid discharge device 300. A liquid discharge device 300' controls a pump 310 and valves 311, 312 to allow the liquid composition 12A to circulate through the liquid discharge head 306, the tank 307, and the tube 308.

The liquid discharge device 300' is also provided with an external tank 314, and it is possible to supply the liquid composition 12A from the external tank 314 to the tank 307 by controlling the pump 310 and the valves 311, 312, and 313 when the liquid composition 12A in the tank 307 is reduced.

If the liquid discharge device 300 or 300' is used, the liquid composition 12A can be discharged to the desired portion of the negative electrode substrate 11. Further, if the liquid discharge device 300 or 300' is used, the surfaces of the negative electrode substrate 11 and the negative electrode composite material layer 12 that contact each other can be bonded. Furthermore, if the liquid discharge device 300 or 300' is used, the thickness of the negative electrode composite material layer 12 can be uniform.

### [Positive Electrode]

An example of a positive electrode is indicated in FIG. 5. In a positive electrode 20, a positive electrode composite material layer 22 including a positive electrode active material and a polymer is formed on one surface of a positive electrode substrate 21. The positive electrode composite material layer 22 may be formed on both surfaces of the positive electrode substrate 21.

The shape of the positive electrode 20 is not particularly limited and may include, for example, a flat plate and the like. Examples of the materials constituting the positive electrode substrate 21 include stainless steel, aluminum, titanium, tantalum, and the like.

### [Method of Manufacturing Positive Electrode]

The method of manufacturing the positive electrode 20 is similar to the method of manufacturing the negative electrode 10 except that the liquid composition is discharged onto the positive electrode substrate 21. Here, the liquid composition includes a positive electrode active material, a dispersion medium, and a polymer.

### [Method of Manufacturing Electrochemical Device]

A method of manufacturing an electrochemical device includes a step of manufacturing an electrode using the method of manufacturing the electrode described above.

### [Electrode Element]

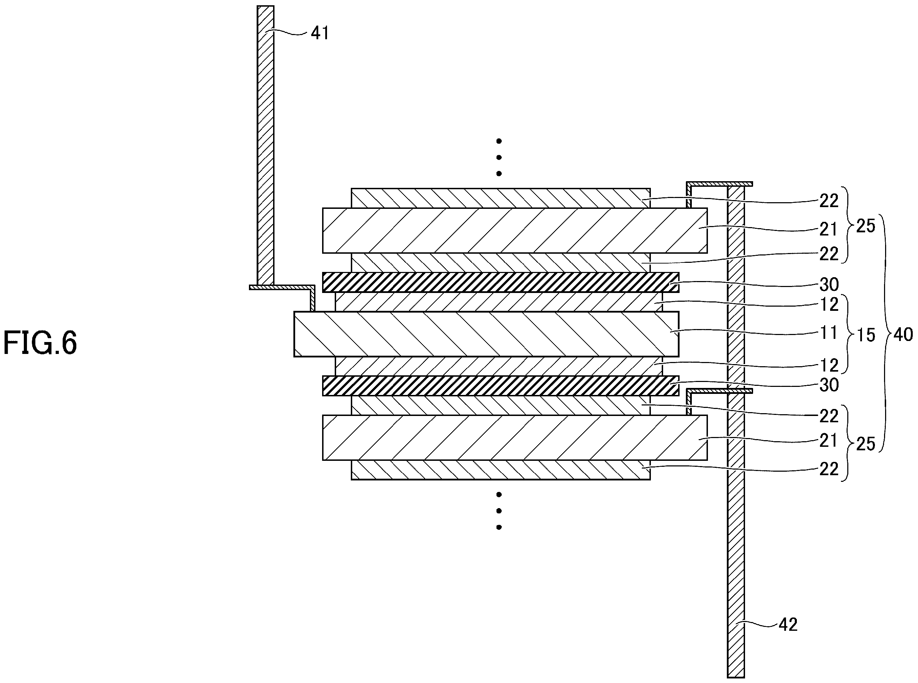

FIG. 6 indicates an example of an electrode element constituting an electrochemical device of the present embodiment. In an electrode element 40, a negative electrode 15 and a positive electrode 25 are laminated through a separator 30. Here, the positive electrode 25 is laminated to both sides of the negative electrode 15. A drawline 41 is connected to the negative electrode substrate 11, and a drawline 42 is connected to the positive electrode substrate 21.

The negative electrode 15 is similar to the negative electrode 10 except that the negative electrode composite material layer 12 is formed on both sides of the negative electrode substrate 11.

The positive electrode 25 is similar to the positive electrode 20 except that the positive electrode composite material layer 22 is formed on both sides of the positive electrode substrate 21.

The number of layers of the negative electrode 15 and the positive electrode 25 of the electrode element 40 is not particularly limited. The number of the negative electrodes 15 and the number of the positive electrodes 25 of the electrode element 40 may be the same or may be different.

### [Separator]

The separator 30 is provided between the negative electrode 15 and the positive electrode 25 to prevent short circuit between the negative electrode 15 and the positive electrode 25.

Examples of the separator 30 include paper such as kraft paper, vinylon mixed paper, synthetic pulp mixed paper, polyolefin non-woven fabric such as cellophane, polyethylene graft film, polypropylene meltblown non-woven fabric, polyamide non-woven fabric, glass fiber non-woven fabric, micropore membrane, and the like.

The size of the separator 30 is not particularly limited if the size of the separator 30 can be used in the electrochemical device.

The separator 30 may be a single layer structure or a laminated structure.

When a solid electrolyte is used, the separator 30 may be omitted.

### [Electrochemical Device]

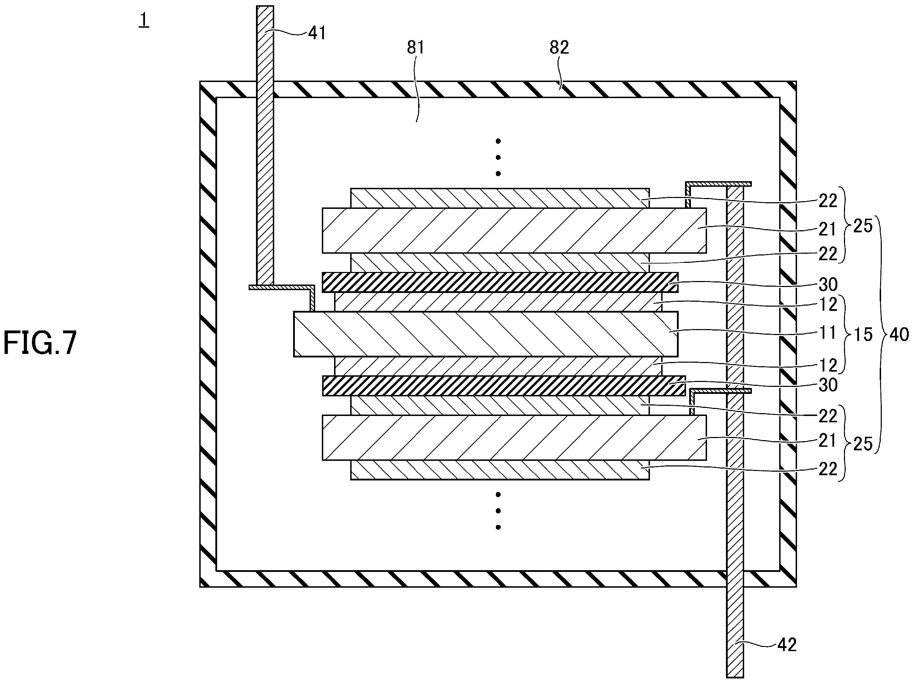

FIG. 7 indicates a secondary battery as an example of the electrochemical device of the present embodiment. In a secondary battery 1, an electrolyte layer 81 is formed by injecting an electrolyte aqueous solution or a non-aqueous electrolyte into the electrode element 40 and is sealed by an outer sheath 82. In the secondary battery 1, the drawlines 41 and 42 are drawn out of the outer sheath 82.

The secondary battery 1 may have other members as desired. As the secondary battery 1, there is no particular limitation. For example, a lithium ion secondary battery and the like may be used.

The shape of the secondary battery 1 is not particularly limited. Examples of the shape of the secondary battery 1 include a laminate type, a cylinder type in which the sheet electrode and the separator are spiraled, a cylinder type in an in-side out structure in which the pellet electrode and the separator are combined, and a coil type in which the pellet electrode and the separator are laminated.

### [Electrolyte Aqueous Solution]

Examples of the electrolyte salt constituting the electrolyte aqueous solution include sodium hydroxide, potassium hydroxide, sodium chloride, potassium chloride, ammonium chloride, zinc chloride, zinc acetate, zinc bromide, zinc iodide, zinc tartrate, zinc perchlorate, and the like.

### [Non-Aqueous Electrolyte]

As the non-aqueous electrolyte, a solid electrolyte or a non-aqueous electrolyte solution may be used. Here, the non-aqueous electrolyte solution is an electrolyte solution in which the electrolyte salt is dissolved in the non-aqueous solvent.

### [Non-Aqueous Solvent]

The non-aqueous solvent is not particularly limited, and for example, an aprotic organic solvent is preferably used.

As the aprotic organic solvent, carbonate-based organic solvents such as a chain carbonate, a cyclic carbonate, and the like may be used. Of these, the chain carbonate is preferably used because of the high solubility of the electrolyte salt. In addition, the aprotic organic solvent preferably has a low viscosity.

Examples of the chain carbonates include dimethyl carbonate (DMC), diethyl carbonate (DEC), methyl ethyl carbonate (EMC), and the like.

The content of the chain carbonate in the non-aqueous solvent is preferably 50% by mass or more. When the content of the chain carbonate in the non-aqueous solvent is 50% by mass or more, a content of cyclic material is reduced even when the non-aqueous solvent other than the chain carbonate is a cyclic material with a high dielectric constant (for example, cyclic carbonate or cyclic ester). Therefore, even when a non-aqueous electrolyte solution having a high concentration of 2 M or more is prepared, the viscosity of the non-aqueous electrolyte solution decreases, and impregnation and ion diffusion into the electrode of the non-aqueous electrolyte solution become favorable.

Examples of the cyclic carbonates include propylene carbonate (PC), ethylene carbonate (EC), butylene carbonate (BC), vinylene carbonate (VC), and the like.

The non-aqueous solvent other than the carbonate organic solvent includes, for example, ester-based organic solvents such as a cyclic ester, a chain ester, and the like, ether-based organic solvents such as a cyclic ether, a chain ether, and the like.

Examples of the cyclic esters include γ-butyrolactone (γBL), 2-methyl-γ-butyrolactone, acetyl-γ-butyrolactone, γ-valerolactone, and the like.

Examples of the chain esters include alkyl propionate ester, dialkyl malonate ester, alkyl acetate ester (for example, methyl acetate (MA), ethyl acetate), alkyl formate ester (for example, methyl formate (MF), ethyl forate), and the like.

Examples of the cyclic ethers include tetrahydrofuran, alkyltetrahydrofuran, alkoxytetrahydrofuran, dialkoxytetrahydrofuran, 1,3-dioxolane, alkyl-1,3-dioxolane, 1,4-dioxolane, and the like.

Examples of the linear ethers include 1,2-dimethoxyethane (DME), diethyl ether, ethylene glycol dialkyl ether, diethylene glycol dialkyl ether, triethylene glycol dialkyl ether, tetraethylene glycol dialkyl ether, and the like.

### [Electrolyte Salt]

As electrolyte salts, there is no particular limitation if the ionic conductivity is high and the salt can be dissolved in the non-aqueous solvent.

The electrolyte salt preferably includes halogen atoms.

Examples of the cations constituting the electrolyte salt include lithium ions and the like.

Examples of the anions constituting the electrolyte salt include BF₄⁻, PF₆⁻, AsF₆⁻, CF₃SO₃⁻, (CF₃SO₂)₂N⁻, (C₂F₅SO₂)₂N⁻, and the like.

The lithium salts are not particularly limited and can be appropriately selected depending on the purpose. Examples of the lithium salts include lithium hexafluorophosphate (LiPF₆), lithium borofluoride (LiBF₄), lithium arsenide (LiAsF₆), lithium trifluorometasulfonate (LiCF₃SO₃), lithium bis (trifluoromethylsulfonyl) imide (LiN(CF₃SO₂)₂), lithium bis (pentafluoroethylsulfonyl) imide (LiN(C₂F₅SO₂)₂), and the like. Among these, LiPF₆ is preferably used from the viewpoint of ionic conductivity, and LiBF₄ is preferably used from the viewpoint of stability.

The electrolyte salt may be used alone or two or more electrolyte salts may be used in combination.

The concentration of the electrolyte salt in the non-aqueous electrolyte solution can be appropriately selected depending on the purpose. When the non-aqueous electrical storage element is a swing type, the concentration of the electrolyte salt in the non-aqueous electrolyte solution is preferably 1 mol/L to 2 mol/L. When the non-aqueous electrical storage element is a reservoir type, the concentration of the electrolyte salt in the non-aqueous electrolyte solution is preferably 2 mol/L to 4 mol/L.

### [Application of Electrochemical Device]

Applications of electrochemical devices include, but are not limited to, notebook PCs, pen input PCs, mobile PCs, electronic book players, cellular phones, portable faxes, portable copies, portable printers, headphone stereos, video movies, liquid crystal televisions, hand held cleaners, portable CDs, mini disks, transceivers, electronic pocketbooks, electronic calculators, memory cards, portable tape recorders, radio, backup power supplies, motors, lights, toys, game machines, watches, strobes, cameras, and the like.

### [Liquid Discharge Device]

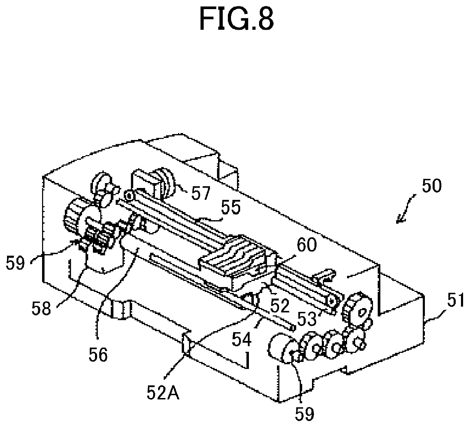

FIG. 8 indicates an example of an ink jet printing device as a liquid discharge device. The ink jet printing device 50 includes a body housing 51, a carriage 52, guide shafts 53 and 54, a timing belt 55, a platen 56, a main scan motor 57, a sub-scan motor 58, and a gear mechanism 59.

The ink jet printing device 50 includes a cartridge 60. The cartridge 60 contains the liquid composition of the present embodiment. The cartridge 60 is housed in the carriage 52 within the body housing 51. In this manner, the liquid composition is supplied from the cartridge 60 to a recording head 52A mounted on the carriage 52. The recording head 52A can discharge the liquid composition.

The recording head 52A mounted on the carriage 52 is guided to and moves through the guide shafts 53 and 54 by the timing belt 55 which is driven by the main scan motor 57. Additionally, an absorbing medium is disposed at a position facing the recording head 52A by the platen 56.

### [Method of Using Liquid Composition]

A method of using the liquid composition, for example, is to apply the liquid composition onto an absorbent medium. When the liquid composition is applied on the absorbent medium, the ink jet printing device 50 described above may be used.

The absorbent medium refers to a medium capable of absorbing the liquid composition. An example of the absorbent medium includes porous membranes.

When the electrode substrate having the electrode composite material layer (the negative composite material layer and the positive composite material layer) containing, for example, a particulate electrode active material (the negative electrode active material and the positive electrode active material) is used as the porous membranes, an electrode-integrated separator can be manufactured.

Examples of the negative electrode active materials include carbon materials capable of intercalating or de-intercalating lithium ions, such as metallic lithium, lithium alloy, carbon, graphite, and the like, a conductive polymer doped with lithium ions, and the like.

Examples of the positive electrode active materials include graphite fluoride represented by the general formula (CFx)n, metal oxides such as CoLiO₂, MnO₂, V₂O₅, CuO, Ag₂CrO₄, TiO₂, and the like; and metal sulfides such as CuS and the like.

Examples of the electrode substrate include copper foil, aluminum foil, and the like.

In addition to the absorbing medium of the above, for example, a substrate used in a reflective display device, an electrode layer used in printed electronics, and the like can be used.

### [Separator-integrated electrode]

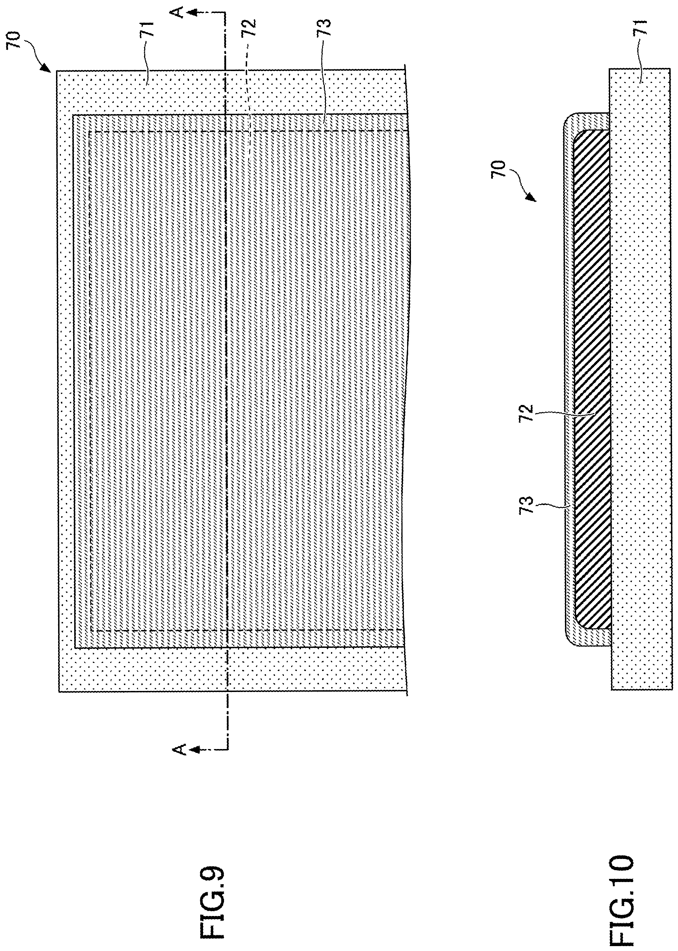

FIG. 9 is a schematic configuration diagram illustrating an example of a separator-integrated electrode. FIG. 10 is a cross-sectional view taken along line A-A in FIG. 9. The separator-integrated electrode represents an electrode having sequentially formed electrode composite material layers and particle layers on the electrode substrate. The separator-integrated electrode can be formed by applying the liquid composition of the present embodiment.

In the separator-integrated electrode 70, the electrode composite material layer 72 and the particle layer 73 are formed sequentially on the electrode substrate 71. When the particle layer 73 is formed, the liquid composition of the present embodiment is used.

The use of the separator-integrated electrode 70 eliminates the need to wind and laminate the electrodes and separators separately when manufacturing the electrochemical device, and thus greatly improves the manufacturing efficiency of the electrochemical device.

Examples of the electrochemical device using the separator-integrated electrode include a lithium ion secondary battery, a magnesium ion secondary battery, a sodium ion secondary battery, a sodium secondary battery, and the like.

For example, such electrochemical devices can be applied to vehicle-mounted batteries, smartphones, and the like.

### [Example]

Although the present invention will be described in further detail with reference to the following examples, the present invention is not limited to these examples. "Parts" and "%" are, unless otherwise noted, mass standards. In addition, various tests and evaluations shall be conducted in accordance with the following methods.

### [Liquid Composition]

As a bead mill dispersion device, alumina particles, a solvent, and a resin were charged into a zirconia container of a cooled nanomilling machine (NP-100, manufactured by Thinky Corporation) in a predetermined amount, and then beads with a particle size of 0.2 mm were appropriately charged into the container to disperse. The dispersion condition of the cooling nanomilling machine was -20°C, and multiple cycles of dispersion were performed using the process of rotating at 1500 rpm for 1 minute and then rotating at 40 rpm for 1 minute as one cycle.

### [Particle Size Evaluation of Liquid Composition]

A desktop scanning electron microscope (Phenom (Registered Trademark) ProX, manufactured by Thermo-Fisher Scientific, Inc.) was used to capture an image of a casting film of the liquid composition.

Particle sizes of the captured SEM images were analyzed after binarization using the particle metric software of the image analysis system (Phenom (Registered Trademark) Pro Suite, manufactured by Thermo Fisher Scientific Inc.). In the binarization process, the particle size to be detected was set to 0.2 µm or more, and 3,000 or more particle sizes were analyzed.

After analyzing 3000 or more alumina particles with a particle size of 0.2 µm or more and calculating the median diameter in the particle size distribution, the ratio of the number of particles having a particle size greater than 1.5 times the median diameter to the total number of particles analyzed was calculated.

### [Evaluation of Viscosity]

The viscosity was evaluated using a viscometer (TVE-25L, manufactured by Toko Sangyo Co., Ltd.). The viscosity measurement at 100 rpm is performed and the viscosity immediately after measurement is defined as η1, and the viscosity one minute after the above measurement is defined as η2. The value calculated by the equation "Thickening index = η2-η1" is defined as the thickening index. The viscosity is evaluated according to the following criteria. If the thickening index does not exceed 0.5 mPa·s, it is sufficient to satisfy the effect obtained by the present invention.
A: 0.0 mPa·s or more and less than 0.1 mPa·s
B: 0.1 mPa·s or more and 0.5 mPa·s or less
C: More than 0.5 mPa·s

### [Preparation of absorbing medium]

A slurry for the negative electrode composite material layer obtained by mixing the negative electrode active material (SCMG-XRs, manufactured by Showa Denko Co., Ltd.), water, and a resin was applied on a copper foil as the negative electrode substrate, and then dried to form the negative electrode composite material layer, which was used as an absorbing medium.

### [Preparation of Negative Electrode-Integrated Separator]

A liquid discharge device (EV2500, manufactured by Ricoh, Co., Ltd.) and a liquid discharge head (MH5421F, manufactured by Ricoh, Co., Ltd.) were used to discharge the liquid composition onto the absorbing medium, and then dried to form a particle layer to obtain a negative electrode-integrated separator. At this time, an appropriate discharge condition was set so that the basis weight was to be 1 mg/cm². Meanwhile, the basis weight refers to the mass per unit area of the particle layer formed on the absorbing medium.

### [Evaluation of Discharge Property and Coating Film Unevenness]

The particle layer obtained by the above-mentioned method was visually evaluated according to the following criteria. The discharge property refers to the intended image being able to be formed by discharging the liquid composition from the head. The coating film unevenness refers to unevenness in the thickness of the coating film after solvent drying not being observed. The discharge property and the coating film unevenness were evaluated with the following criteria.
A: Excellent image quality
B: No problem with image quality
C: Problem with image quality
N.D.: Impossible to form image and not evaluated

### Hereinafter, examples and comparative examples will be described.

### [Example 1]

A dispersant solution was prepared by fully dissolving 0.30 g of the dispersant (MALIALIM SC-0708A, manufactured by NOF Corporation) in 5.32 g of ethyl lactate (Solvent A). 6.00 g of alumina particles (LS-711CB, manufactured by Nippon Light Metal Co., Ltd.) were fully dispersed in this dispersant solution to obtain the dispersion liquid. Zirconia beads with a particle size of 0.2 mm and a cooling nanomilling machine (NP-100, manufactured by Thinky Inc.) were used for dispersion, and the dispersion was repeated for 10 times (the number of dispersion cycles was 10).

3.5 g of hexylene glycol (solvent B) was added to the dispersion liquid and fully mixed to obtain the liquid composition.

Table 1 indicates the ratio of the alumina particles to the liquid composition (hereinafter referred to as a solid content concentration), the ratio of the alumina particles whose particle size exceeds 1.5 times the median diameter (hereinafter referred to as a coarse particle ratio), and the evaluation results of thickening index, discharge property, and coating film unevenness.

### [Example 2]

The liquid composition was obtained in the same manner as Example 1 except that the amount of hexylene glycol added was changed to 5.5 g. The results are indicated in Table 1.

### [Example 3]

The liquid composition was obtained in the same manner as Example 1 except that the amount of hexylene glycol added was changed to 8.5 g. The results are indicated in Table 1.

### [Example 4]

The liquid composition was obtained in the same manner as Example 1 except that the amount of hexylene glycol added was changed to 1.8 g. The results are indicated in Table 1.

### [Example 5]

The liquid composition was obtained in the same manner as Example 1 except that the amount of hexylene glycol added was changed to 19 g. The results are indicated in Table 1.

### [Example 6]

The liquid composition was obtained in the same manner as Example 1 except that the amount of hexylene glycol added was changed to 0.5 g. The results are indicated in Table 1.

### [Example 7]

The liquid composition was obtained in the same manner as Example 1 except that the number of dispersion cycles was changed to 20. The results are indicated in Table 1.

### [Example 8]

The liquid composition was obtained in the same manner as Example 1, except that the number of dispersion cycles was changed to one. The results are indicated in Table 1.

### [Example 9]

The liquid composition was obtained in the same manner as in Example 1, except that the number of dispersion cycles was changed to 50. The results are indicated in Table 1.

### [Example 10]

The liquid composition was obtained in the same manner as Example 1, except that the dispersant was changed to MALIALIM SC-0505K, manufactured by NOF Corporation. The results are indicated in Table 2.

### [Example 11]

The liquid composition was obtained in the same manner as Example 2, except that the dispersant was changed to MALIALIM SC-0505K, manufactured by NOF Corporation. The results are indicated in Table 2.

### [Example 12]

The liquid composition was obtained in the same manner as Example 3, except that the dispersant was changed to MALIALIM SC-0505K, manufactured by NOF Corporation. The results are indicated in Table 2.

### [Example 13]

The liquid composition was obtained in the same manner as Example 4, except that the dispersant was changed to MALIALIM SC-0505K, manufactured by NOF Corporation. The results are indicated in Table 2.

### [Example 14]

The liquid composition was obtained in the same manner as Example 5, except that the dispersant was changed to MALIALIM SC-0505K, manufactured by NOF Corporation. The results are indicated in Table 2.

### [Example 15]

The liquid composition was obtained in the same manner as Example 6, except that the dispersant was changed to MALIALIM SC-0505K, manufactured by NOF Corporation. The results are indicated in Table 2.

### [Example 16]

The liquid composition was obtained in the same manner as Example 7, except the dispersant was changed to MALIALIM SC-0505K, manufactured by NOF Corporation. The results are indicated in Table 2.

### [Example 17]

The liquid composition was obtained in the same manner as Example 8, except that the dispersant was changed to MALIALIM SC-0505K, manufactured by NOF Corporation. The results are indicated in Table 2.

### [Example 18]

The liquid composition was obtained in the same manner as Example 9, except that the dispersant was changed to MALIALIM SC-0505K, manufactured by NOF Corporation. The results are indicated in Table 2.

### [Example 19]

The liquid composition was obtained in the same manner as Example 1, except that the dispersant was changed to MALIALIM SC-1015F, manufactured by NOF Corporation. The results are indicated in Table 3.

### [Example 20]

The liquid composition was obtained in the same manner as Example 2, except the dispersant was changed to MALIALIM SC-1015F, manufactured by NOF Corporation. The results are indicated in Table 3.

### [Example 21]

The liquid composition was obtained in the same manner as Example 3, except that the dispersant was changed to MALIALIM SC-1015F, manufactured by NOF Corporation. The results are indicated in Table 3.

### [Example 22]

The liquid composition was obtained in the same manner as Example 4, except that the dispersant was changed to MALIALIM SC-1015F, manufactured by NOF Corporation. The results are indicated in Table 3.

### [Example 23]

The liquid composition was obtained in the same manner as Example 5, except that the dispersant was changed to MALIALIM SC-1015F, manufactured by NOF Corporation. The results are indicated in Table 3.

### [Example 24]

The liquid composition was obtained in the same manner as Example 6, except that the dispersant was changed to MALIALIM SC-1015F, manufactured by NOF Corporation. The results are indicated in Table 3.

### [Example 25]

The liquid composition was obtained in the same manner as Example 7, except that the dispersant was changed to MALIALIM SC-1015F, manufactured by NOF Corporation. The results are indicated in Table 3.

### [Example 26]

The liquid composition was obtained in the same manner as Example 8, except that the dispersant was changed to MALIALIM SC-1015F, manufactured by NOF Corporation. The results are indicated in Table 3.

### [Example 27]

The liquid composition was obtained in the same manner as Example 9, except that the dispersant was changed to MALIALIM SC-1015F, manufactured by NOF Corporation. The results are indicated in Table 3.

### [Comparative Example 1]

The liquid composition was obtained in the same manner as Example 1, except that hexylene glycol was not added. The results are indicated in Table 1.

### [Comparative Example 2]

The liquid composition was obtained in the same manner as Example 1, except that the amount of hexylene glycol added was changed to 29 g. The results are indicated in Table 1.

### [Comparative Example 3]

The liquid composition was obtained in the same manner as Example 1, except that the number of dispersion cycles was changed to 100. The results are indicated in Table 1.

### [Comparative Example 4]

The liquid composition was obtained in the same manner as in Example 1, except that the number of dispersion cycles was changed to 100 and hexylene glycol was not added. The results are indicated in Table 1.

### [Comparative Example 5]

The liquid composition was obtained in the same manner as Comparative Example 1, except that the dispersant was changed to MALIALIM SC-0505K, manufactured by NOF Corporation. The results are indicated in Table 2.

### [Comparative Example 6]

The liquid composition was obtained in the same manner as Comparative Example 2, except that the dispersant was changed to MALIALIM SC-0505K, manufactured by NOF Corporation. The results are indicated in Table 2.

### [Comparative Example 7]

The liquid composition was obtained in the same manner as Comparative Example 3, except that the dispersant was changed to MALIALIM SC-0505K, manufactured by NOF Corporation. The results are indicated in Table 2.

### [Comparative Example 8]

The liquid composition was obtained in the same manner as Comparative Example 4, except that the dispersant was changed to MALIALIM SC-0505K, manufactured by NOF Corporation. The results are indicated in Table 2.

### [Comparative Example 9]

The liquid composition was obtained in the same manner as Comparative Example 1, except that the dispersant was changed to MALIALIM SC-1015F, manufactured by NOF Corporation. The results are indicated in Table 3.

### [Comparative Example 10]

The liquid composition was obtained in the same manner as Comparative Example 2, except that the dispersant was changed to MALIALIM SC-1015F, manufactured by NOF Corporation. The results are indicated in Table 3.

### [Comparative Example 11]

The liquid composition was obtained in the same manner as Comparative Example 3, except that the dispersant was changed to MALIALIM SC-1015F, manufactured by NOF Corporation. The results are indicated in Table 3.

### [Comparative Example 12]

The liquid composition was obtained in the same manner as Comparative Example 4, except that the dispersant was changed to MALIALIM SC-1015F, manufactured by NOF Corporation. The results are indicated in Table 3.

### [Preparation of Absorbing Medium]

A slurry for the negative electrode composite material layer obtained by mixing and kneading the negative electrode active material (SCMG-XRs, manufactured by Showa Denko Co., Ltd.), water, and a resin was applied on the copper foil as the negative electrode substrate, and then dried to form the negative electrode composite material layer, which was used as an absorbing medium.

### [Preparation of Negative Electrode-Integrated Separator]

A liquid discharge device (EV2500, manufactured by Ricoh, Co., Ltd.) and a liquid discharge head (MH5421F, manufactured by Ricoh, Co., Ltd.) were used to discharge the liquid composition onto the absorbing medium, and then dried to form a particle layer to obtain a negative electrode-integrated separator. At this time, an appropriate discharge condition was set so that the basis weight was to be 1 mg/cm². Meanwhile, the basis weight refers to the mass per unit area of the particle layer formed on the absorbing medium.

### [Discharge Property and Coating Film Unevenness]

The particle layer obtained by the above-mentioned method was visually evaluated according to the following criteria. The discharge property refers to the intended image being able to be formed by discharging the liquid composition from the head. The coating film unevenness refers to unevenness in the thickness of the coating film after solvent drying not being observed. The discharge property and the coating film unevenness were evaluated with the following criteria.

### [Evaluation Criteria]

A: Excellent image quality
B: No problem with image quality
C: Problem with image quality
N.D.: Impossible to form image and not evaluated

Tables 1 to 3 indicate the ratio of the alumina particles to the liquid composition (hereinafter referred to as the solid content concentration), the ratio of the alumina particles whose particle size exceeds 1.5 times the median diameter (hereinafter referred to as the coarse particle ratio), and the evaluation results of thickening index, discharge property, and coating film unevenness.

**[Table 1]**

| | Examples | | | | | | | | | Com parative Examples | | | |
|---|---|---|---|---|---|---|---|---|---|---|---|---|---|
| | 1 | 2 | 3 | 4 | 5 | 6 | 7 | 8 | 9 | 1 | 2 | 3 | 4 |
| Solid content concentration [%] | 40 | 35 | 30 | 45 | 20 | 50 | 40 | 40 | 40 | 52 | 15 | 40 | 52 |
| Coarse particle ratio [%] | 15 | 15 | 15 | 15 | 15 | 15 | 10 | 20 | 1 | 15 | 15 | 0 | 0 |
| Thickenng index | A | A | A | A | A | B | A | A | B | C | A | C | C |
| Discharge property | A | A | A | A | A | B | A | A | B | C | A | C | C |
| Coating film unevenness | A | A | B | A | B | A | A | A | A | N.D. | C | N.D. | N.D. |

**[Table 2]**

| | Examples | | | | | | | | | Com parative Examples | | | |
|---|---|---|---|---|---|---|---|---|---|---|---|---|---|
| | 10 | 11 | 12 | 13 | 14 | 15 | 16 | 17 | 18 | 5 | 6 | 7 | 8 |
| So lid content concentration [%] | 40 | 35 | 30 | 45 | 20 | 50 | 40 | 40 | 40 | 52 | 15 | 40 | 52 |
| Coarse particle ratio [%] | 15 | 15 | 15 | 15 | 15 | 15 | 10 | 20 | 1 | 15 | 15 | 0 | 0 |
| Thickening index | A | A | A | A | A | B | A | A | B | c | A | C | C |
| Discharge property | A | A | A | A | A | B | A | A | B | C | A | C | C |
| Coating film unevenness | A | A | B | A | B | A | A | A | A | N.D. | C | N.D. | N.D. |

**[Table 3]**

| | Examples | | | | | | | | | Com parative Examples | | | |
|---|---|---|---|---|---|---|---|---|---|---|---|---|---|
| | 19 | 20 | 21 | 22 | 23 | 24 | 25 | 26 | 27 | 9 | 10 | 11 | 12 |
| Solid content concentration [%] | 40 | 35 | 30 | 45 | 20 | 50 | 40 | 40 | 40 | 52 | 15 | 40 | 52 |
| Coarse particle ratio [%] | 15 | 15 | 15 | 15 | 15 | 15 | 10 | 20 | 1 | 15 | 15 | 0 | 0 |
| Thickening index | A | A | A | A | A | B | A | A | B | C | A | C | C |
| Discharge property | A | A | A | A | A | B | A | A | B | C | A | C | C |
| Coating fihi unevenness | A | A | B | A | B | A | A | A | A | N.D. | C | N.D. | N.D. |

From Tables 1 to 3, it has been found that ihe liquid compositions of Examples can be used to provide excellent image quality without problems for discharging property and film coating unevenness

On the other hand, in Comparative Examples 1, 4, 5, 8, 9, and 12, the solid content concentration exceeded 50% by weight, and the thickening index exceeded 0.5 mPa·s. Therefore, as discharge failure occurred, images were not formed.

In Comparative Examples 2, 6, and 10, the solid content concentration was below 20% by weight. Therefore, as it took a relatively long time to evaporate the solvent, the particles in the solvent moved. Accordingly, coating film unevenness occurred after drying.

In Comparative Examples 3, 4, 7, 8, 11, and 12, the coarse particle ratio was 0% and the thickening index exceeded 0.5 mPa·s. Therefore, as discharge failure occurred, images were not formed.

While embodiments of the invention have been described, the invention is not limited to specific embodiments, and various modifications and variations are possible within the scope of the invention as claimed.

The present application is based on and claims priority under Japanese Patent Application No. 2021-031494, filed on March 1, 2021, the contents of which are incorporated herein by reference in their entirety.

## Claims

1. A liquid composition comprising:
alumina; and
a solvent (A),
wherein a ratio of the alumina to the liquid composition is 20% by mass or more and 50% by mass or less, and
wherein the alumina contains alumina particles having a particle size greater than 1.5 times a median diameter of the alumina.

2. The liquid composition according to claim 1, wherein a ratio of a number of alumina particles greater than 1.5 times the median diameter is 10% or higher.

3. The liquid composition according to claim 1 or 2, wherein a main component of the alumina is α-alumina.

4. The liquid composition according to claim 1, 2 or 3, wherein the alumina is α-alumina.

5. The liquid composition according to any one of claims 1 to 4, wherein the ratio of the alumina to the liquid composition is 35% by mass or more and 45% by mass or less.

6. The liquid composition according to any one of claims 1 to 7, further comprising a resin.

7. The liquid composition according to claim 6, wherein the resin is a dispersant having a dispersible group and an adsorptive group.

8. The liquid composition according to any one of claims 1 to 7, further comprising a solvent (B) different from the solvent (A).

9. The liquid composition according to any one of claims 1 to 8, wherein a thickening index is 0.5 mPa·s or less.
